# EUROPÄISCHE PATENTANMELDUNG

(11) **EP 4 741 177 A1**
(43) Veröffentlichungstag der Anmeldung: **13.05.2026**
(21) Anmeldenummer: 25206823.4
(22) Anmeldetag: 06.10.2025
(51) Int. Cl.: B60C 11/11, B60C 11/13, B60C 11/03

(54) **FAHRZEUGREIFEN UND LAUFSTREIFEN**

(30) Priorität: 06.11.2024 DE 102024210667
(71) Anmelder: Continental Reifen Deutschland GmbH, 30175 Hannover (DE)
(72) Erfinder: Porubsky, Daniel, 020 01 Púchov (SK); Meier, Nico, 30175 Hannover (DE); Eikermann, Wilke, 30175 Hannover (DE); Forascepi, Alejandro, 30175 Hannover (DE); Henneberger, Ben, 30175 Hannover (DE); Rathe, Benjamin, 30175 Hannover (DE); Foltin, Miroslav, 020 01 Púchov (SK)
(74) Vertreter: Continental Corporation

(57) **Zusammenfassung**

Laufstreifen (1) für einen Fahrzeugreifen (2), wobei in dem Laufstreifen (1) Profilnegativ (3) und Profilpositiv (4) ausgebildet ist, wobei das Profilpositiv (4) in einer Radialrichtung (R) außen von einer Basisfläche (5) des Laufstreifens (1) begrenzt wird, wobei das Profilpositiv (4) wenigstens abschnittsweise durch eine Flankenfläche (6) gegenüber dem Profilnegativ (3) abgegrenzt ist, wobei zwischen der Flankenfläche (6) und der Basisfläche (5) eine Übergangsfläche (8) ausgebildet ist, wobei die Übergangsfläche (8) entlang einer Kantenkontur (9) an die Basisfläche (5) angrenzt.

Radial unterhalb der Übergangsfläche (8) verläuft eine imaginäre Flankenkontur (10) in einer konstanten radialen Höhe auf der Flankenfläche (6), wobei die Kantenkontur (9) an einer ersten axialen Position (11) einen um eine erste Winkeldifferenz größeren Winkel (18) mit einer Axialrichtung (A) einschließt als die Flankenkontur (10).

## Beschreibung

Die Erfindung betrifft einen Laufstreifen für einen Fahrzeugreifen, wobei in dem Laufstreifen Profilnegativ und Profilpositiv ausgebildet ist, wobei das Profilpositiv in einer Radialrichtung außen von einer Basisfläche des Laufstreifens begrenzt wird, wobei das Profilpositiv wenigstens abschnittsweise durch eine Flankenfläche gegenüber dem Profilnegativ abgegrenzt ist, wobei zwischen der Flankenfläche und der Basisfläche eine Übergangsfläche ausgebildet ist, wobei die Übergangsfläche entlang einer Kantenkontur an die Basisfläche angrenzt.

Es ist an sich bekannt, Übergangsflächen zwischen Flankenflächen und der Basisfläche eines Laufstreifens auszubilden. Ein typisches Beispiel für eine Übergangsfläche ist eine Fase. Fasen können beispielsweise dazu eingesetzt werden, das Bremsverhalten eines Fahrzeugreifens zu verbessern.

Unabhängig davon, ob Fasen oder sonstige Details in Laufstreifen ausgebildet sind, werden an Fahrzeugreifen zunehmend höhere Anforderungen in Bezug auf eine Geräuscherzeugung gestellt. An der Geräuscherzeugung sind in den Reifenlatsch eintretende Kanten im Profil eines Laufstreifes beteiligt. Weiterhin spielt die Steifigkeit des Laufstreifens eine Rolle dabei, inwieweit mechanische Anregungen von der Lauffläche in eine radial tiefer liegende Konstruktion, wie einen Gürtelverband und eine Karkasse des Fahrzeugreifens weitergeleitet werden. Generell sind höhere Kantenwinkel gegenüber einer Axialrichtung bzw. gegenüber einem Umriss des Reifenlatsches einer geringen Geräuscherzeugung zuträglich. Eine entsprechende Gestaltung des Laufstreifenprofils geht jedoch oft mit einem höheren Profilnegativanteil und/oder einer verringerten Steifigkeit im Laufstreifen angeordneter Profilblöcke einher. Vor dem Hintergrund der genannten Zusammenhänge ist es schwierig, einen geeigneten Kompromiss in Bezug auf das Geräuschverhalten des Laufstreifens zu finden, zumal jeder Eingriff in den Negativanteil des Profils auch weitere Zielgrößen, wie den Rollwiderstand und/oder das Entwässerungsverhalten des Laufstreifens beeinflussen kann.

Der Erfindung liegt die Aufgabe zugrunde, einen Laufsteifen bzw. einen Fahrzeugreifen mit optimiertem Geräuschverhalten zu schaffen, ohne weitere Zielgrößen negativ zu beeinflussen.

Die Aufgabe wird erfindungsgemäß dadurch gelöst, dass radial unterhalb der Übergangsfläche eine imaginäre Flankenkontur in einer konstanten radialen Höhe auf der Flankenfläche verläuft, wobei die Kantenkontur an einer ersten axialen Position einen um eine erste Winkeldifferenz größeren Winkel mit einer Axialrichtung einschließt als die Flankenkontur.

Die Erfindung erkennt, dass das Laufstreifenprofil in verschiedenen radialen Höhen unterschiedlich gestaltet werden kann und findet einen Weg, dies zum doppelten Vorteil für die Geräuschentwicklung zu nutzen: Erstens kann ein Winkel der Kantenkontur für den Eintritt in den Reifenlatsch optimiert werden. Zweitens kann eine Blocksteifigkeit durch einen geeigneten Verlauf der Flankenkontur auf einem hohen Niveau gehalten werden, bzw. kann durch einen von dem Winkel der Kantenkontur abweichenden Winkel der Flankenkontur ein unnötig großer Materialverlust an der Flanke des Profilpositivs vermieden werden. Durch die damit erhaltene Blocksteifigkeit kann, als positiver Nebeneffekt, zudem ein verbesserter Rollwiderstand erzielt werden.

Sofern im vorliegenden Text die Richtungsbezeichnungen axial, in Axialrichtung, radial, in Radialrichtung und in Umfangsrichtung verwendet werden, beziehen sich diese auf den bestimmungsgemäß an einem Fahrzeugreifen angebrachten Laufstreifen bzw. den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist.

In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einem Reifenäquator, einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Laufstreifens verlaufen. Die Basisfläche fällt zusammen mit jener glatten Oberfläche, welche der Laufstreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner oder gleich einer maximale Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein und mit einer Lauffläche des Laufstreifens zusammenfallen. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der Schneekante weiter.

Alle beschriebenen Merkmale beziehen sich insbesondere auf einen Neuzustand des Laufstreifens. Die Beschreibungen und Definitionen beziehen sich zudem vorzugsweise auf einen Laufstreifen im abgewickelten Zustand. Der abgewickelte Zustand kann rein konzeptionell, im Rahmen einer virtuellen Entwicklung des Laufstreifens betrachtet werden. Alternativ oder zusätzlich kann ein Laufstreifen, der zur Erneuerung eines Fahrzeugreifens im sogenannten Retreading-Verfahren vorgesehen ist, auch physisch im abgewickelten Zustand existieren, bevor er auf den Fahrzeugreifen aufgebracht, den Rundungen des Fahrzeugreifens angepasst und mit dem Fahrzeugreifen verbunden wird.

Die mit den Merkmalen des Hauptanspruchs erzielten Effekte können durch bevorzugte Ausführungsformen und Ausgestaltungen unterstützt und weiter verstärkt werden.

Das Profilnegativ kann in Form von Profilrillen und/oder Einschnitten vorliegen, wobei Profilrillen sich von Einschnitten in erster Linie durch eine größere Breite, üblicherweise von mehr als 2 mm unterschieden und wobei Einschnitte, auch Lamellen genannt, sich üblicherweise im Reifenlatsch unter dem Gewicht eines Fahrzeugs zumindest teilweise schließen. Das Profilpositiv kann in Form von Profilrippen und/oder Profilblöcken vorliegen, wobei Profilrippen zu einer oder zwei Seiten von Profilrillen, insbesondere Umfangsrillen begrenzt sind und wobei Profilblöcke zu wenigstens drei Seiten von Profilrillen begrenzt sind. Eine Profilrippe bzw. ein Profilblock kann jeweils von einem oder mehreren Einschnitten durchzogen sein. Die Flankenfläche kann zwischen einer Profilrippe oder einem Profilblock auf der einen Seite und einer Profilrille oder einem Einschnitt auf der anderen Seite ausgebildet sein, bzw. die genannten Arten von Profilpositiv und Profilnegativ voneinander abgrenzen.

Die Flankenkontur ist in dem Sinne imaginär, als sie lediglich eine gedankliche, konzeptionelle Hilfslinie ist, die zwar auf der physisch vorhandenen Flankenfläche verläuft, darüber hinaus jedoch nicht am Laufstreifen detektierbar ist. Als Winkel, den die Kantenkontur bzw. die Flankenkontur mit der Axialrichtung einschließt, gilt jeweils der kleinere in Betracht kommende Winkel eines sich gegenseitig zu 180° ergänzenden Winkelpaares.

Die Kantenkontur kann an einer zweiten axialen Position einen gleichgroßen Winkel mit der Axialrichtung einschließen wie die Flankenkontur. Die Winkeldifferenz zwischen der Kantenkontur und der Flankenkontur kann also an der ersten axialen Position größer sein als an der zweiten axialen Position und insbesondere an der zweiten axialen Position Null betragen. Hierbei kann die Kantenkontur an der zweiten axialen Position an einer Grenze zwischen der Übergangsfläche und der Basisfläche oder zwischen der Flankenfläche und der Basisfläche verlaufen; mit anderen Worten kann an der zweiten axialen Position eine Übergangsfläche ausgebildet sein oder aber die Flankenfläche direkt in die Basisfläche übergehen.

Die erste axiale Position kann weiter von einem Reifenäquator entfernt sein als die zweite axiale Position. Insbesondere kann die zweite axiale Position direkt am Reifenäquator angeordnet sein. Die Kantenkontur und/oder die Flankenkontur können von dem Reifeäquator geschnitten werden und können insbesondere spiegelsymmetrisch zu dem Reifenäquator verlaufen. In diesem Fall können die Kantenkontur und/oder die Flankenkontur um den Reifenäquator herum v-förmig oder u-förmig verlaufen. An der Spitze eines solchen v-förmigen Verlaufs kann ein mit der Axialrichtung eingeschlossener Winkel als Null gelten; dies wird in der Praxis üblicherweise aufgrund eines Verrundungsradius an der Spitze auch tatsächlich, wenigstes mikroskopisch der Fall sein.

Die Kantenkontur kann an einer dritten axialen Position einen um eine dritte Winkeldifferenz größeren Winkel mit der Axialrichtung einschließen als die Flankenkontur, wobei die dritte Winkeldifferenz größer ist als die erste Winkeldifferenz. Die dritte axiale Position kann weiter von dem Reifenäquator entfernt sein als die erste axiale Position. Dies kann insbesondere dadurch realisiert sein, dass die Kantenkontur und/oder die Flankenkontur zwischen der ersten und der dritten axialen Position gekrümmt verlaufen und/oder einen Knick aufweisen.

Durch das Zulassen bzw. den gezielten Einsatz unterschiedlicher Winkeldifferenzen an der ersten, zweiten und/oder dritten axialen Position können die Verläufe der Kanten- und Flankenkontur bzw. die Gestalt der Übergangsfläche und Flankenfläche individuell optimiert werden.

Die Flankenfläche kann entlang einer Grenzlinie an die Übergangsfläche angrenzen, wobei die Grenzlinie wenigstens abschnittsweise in einer veränderlichen radialen Höhe verläuft. Auf diese Weise kann die Gestaltung der Übergangsfläche und der Flankenfläche dreidimensional optimiert werden.

Insbesondere kann die Grenzlinie an einem niedrigsten Punkt in einer radialen Höhe in einem Bereich zwischen 50% und 90% eines radialen Abstands zwischen einem Grund des Profilnegativs und der Basisfläche oberhalb des Grundes des Profilnegativs verlaufen. Alternativ oder zusätzlich kann die Grenzlinie an einem höchsten Punkt in einer radialen Höhe in einem Bereich zwischen 80% und 100% des radialen Abstands zwischen dem Grund des Profilnegativs und der Basisfläche oberhalb des Grundes des Profilnegativs verlaufen. Gemäß einer Ausführungsform steigt die Grenzlinie wenigstens abschnittsweise von axial außen kommend in Richtung des Reifenäquators an und verläuft am Reifenäquator auf dem Niveau der Basisfläche. Dort, wo die Grenzlinie auf dem Niveau der Basisfläche verläuft, ist keine Übergangsfläche zwischen der Flankenfläche und der Basisfläche ausgebildet; die Grenzlinie kann also abschnittsweise auch direkt zwischen der Flankenfläche und der Basisfläche verlaufen.

Die Kantenkontur kann an einer weiteren axialen Position einen um eine weitere Winkeldifferenz größeren Winkel mit der Axialrichtung einschließen als die Flankenkontur, wobei die weitere Winkeldifferenz größer ist als die erste Winkeldifferenz und wobei die Grenzlinie an der ersten axialen Position auf einer größeren radialen Höhe verläuft als an der weiteren axialen Position. Dies kann beispielsweise dadurch erreicht werden, dass die Grenzlinie eine Krümmung um eine parallel zu der Basisfläche verlaufende Achse vollzieht, wobei entsprechende Krümmungsradien in einem Bereich zwischen 5 mm und 50 mm liegen können. Alternativ oder zusätzlich kann die Kantenkontur eine Krümmung um eine in Radialrichtung verlaufende Achse vollziehen, wobei entsprechende Krümmungsradien in einem Bereich zwischen 5 mm und 50 mm liegen können. Auf diese Weise kann die Übergangsfläche zwischen zwei in unterschiedlichen Richtungen vollzogenen Kurvenverläufen definiert sein. Hierdurch lassen sich auf besonders elegante Weise Winkeldifferenzen zwischen Flankenkontur und Kantenkontur erzielen, ohne zu viel Steifigkeit durch Verlust von Laufstreifenmaterial einzubüßen.

Alternativ oder zusätzlich kann die Flankenfläche entlang der Grenzlinie wenigstens abschnittsweise in einer konstanten radialen Höhe an die Übergangsfläche angrenzen. Dies vereinfacht das Design und schafft wenigstens entlang des Abschnitts konstanter radialer Höhe gleichmäßige mechanische Bedingungen.

Die Grenzlinie kann wenigstens abschnittsweise in einer konstanten radialen Höhe in einem Bereich zwischen 70% und 95% eines radialen Abstands zwischen einem Grund des Profilnegativs und der Basisfläche oberhalb des Grundes des Profilnegativs verlaufen. Auf diese Weise kann ein guter Kompromiss zwischen einer Lebensdauer der Winkeldifferenz zwischen Kantenkontur und Flankenkontur unter Reifenabrieb auf der einen Seite und einem möglichst geringen, durch zusätzliches Negativvolumen bedingten Steifigkeitsverlust auf der anderen Seite gefunden werden.

Die Flankenkontur kann wenigstens abschnittsweise an der Grenzlinie auf der Flankenfläche verlaufen. Dies ist dort möglich, wo die Grenzlinie auf einer konstanten radialen Höhe verläuft.

Die Kantenkontur kann wenigstens abschnittsweise geradlinig verlaufen und/oder die Flankenkontur kann wenigstens abschnittsweise geradlinig verlaufen, wodurch ein besonders einfaches und effizientes Design geschaffen werden kann.

Es können Umfangsrillen, insbesondere vier Umfangsrillen in dem Laufstreifen ausgebildet sein. Es kann ein direktionales Profil in dem Laufstreifen ausgebildet sein. In einem solchen Profil-Umfeld kann die Erfindung besonders gewinnbringend implementiert werden. Dies liegt daran, dass in Profilen mit vier Umfangsrillen üblicherweise eine axial zentrale Umfangsrippe bzw. eine axial zentrale Reihe von Profilblöcken ausgebildet ist und dass in direktionalen Profilen insbesondere in dem axial zentralen Bereich üblicherweise in Draufsicht v-förmige Konturen an der Basisfläche anliegen, was in besonderem Maße zur Geräuschentwicklung in einem Reifen beiträgt.

Der erfindungsgemäße Laufstreifen kann ein Laufstreifen zur Erneuerung eines Fahrzeugreifens im Retreading-Verfahren sein. Insbesondere kann der Laufstreifen im Zusammenhang mit einem Cold-Retreading-Verfahren hergestellt bzw. bereitgestellt werden, wobei die Profilmerkmale bereits im Wesentlichen vollständig in dem Laufstreifen ausgebildet sind, bevor der Laufstreifen auf den Fahrzeugreifen gebracht und mit diesem verbunden wird.

Die vorliegende Erfindung betrifft zudem einen Fahrzeugreifen, umfassend einen erfindungsgemäßen Laufstreifen, vorzugsweise einen erfindungsgemäßen Laufstreifen wie im vorliegenden Text als bevorzugt beschrieben. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge. Erfindungsgemäße Fahrzeugreifen können für Felgengrößen in einem Bereich zwischen 12 Zoll und 25 Zoll ausgelegt sein, insbesondere für Felgengrößen in einem Bereich zwischen 17 Zoll bis 25 Zoll, weiter insbesondere für eine Felgengröße von 22,5 Zoll.

Die Erfindung betrifft auch eine Reifenform zur Herstellung eines erfindungsgemäßen Laufstreifens und/oder Fahrzeugreifens.

Der Laufstreifen kann mit weiteren Merkmalen fortgebildet werden, die im Zusammenhang mit dem erfindungsgemäßen Fahrzeugreifen und/oder der erfindungsgemäßen Reifenform beschrieben sind. Der Fahrzeugreifen kann mit weiteren Merkmalen fortgebildet werden, die im Zusammenhang mit dem erfindungsgemäßen Laufstreifen und/oder der erfindungsgemäßen Reifenform beschrieben sind. Die Reifenform kann mit weiteren Merkmalen fortgebildet werden, die im Zusammenhang mit dem erfindungsgemäßen Laufstreifen und/oder dem erfindungsgemäßen Fahrzeugreifen beschrieben sind.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine seitliche Ansicht einer Ausführungsform eines erfindungsgemäßen Fahrzeugreifens,
Figur 2 schematisch und ausschnittsweise eine perspektivische Draufsicht auf eine erste Ausführungsführungsform eines erfindungsgemäßen Laufstreifens,
Figur 3 schematisch und ausschnittsweise eine perspektivische Draufsicht auf eine zweite Ausführungsführungsform eines erfindungsgemäßen Laufstreifens.

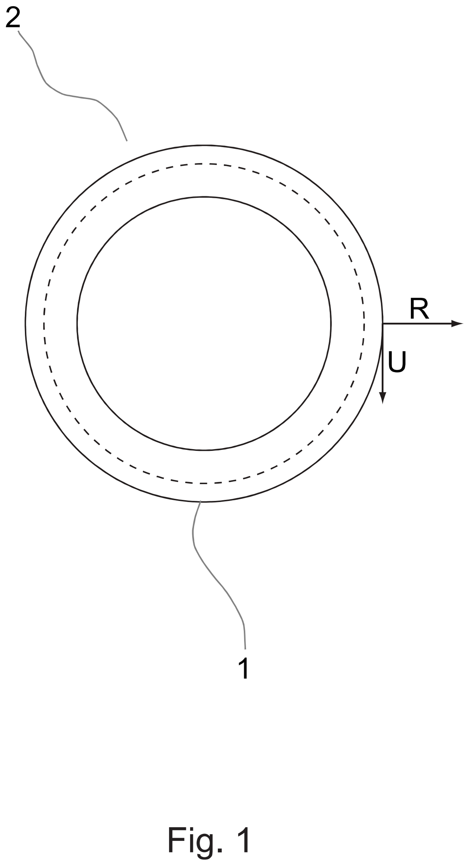

Figur 1 zeigt schematisch eine seitliche Ansicht einer Ausführungsform eines erfindungsgemäßen Fahrzeugreifens 2. Die Radialrichtung R und die Umfangsrichtung U sind mit Pfeilen gekennzeichnet. Radial außen an dem Reifen 2 ist eine Ausführungsform eines erfindungsgemäßen Laufstreifens 1 angeordnet.

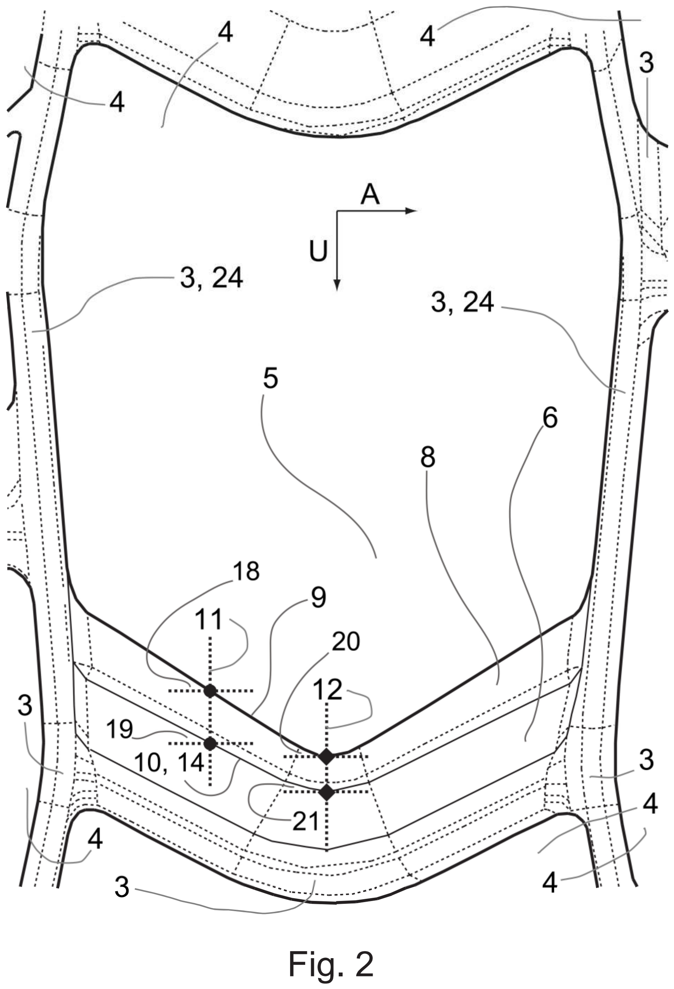

Figur 2 zeigt schematisch und ausschnittsweise eine Draufsicht auf eine erste Ausführungsführungsform eines erfindungsgemäßen Laufstreifens 1. Im Zentrum der Figur steht Profilpositiv 4 in Form eines Profilblocks, der zwischen Profilnegativ 3 definiert ist. In der Figur links und rechts, jeweils von oben nach unten verlaufendes Profilnegativ 3 ist in Form von Umfangsrillen 24 ausgebildet. Die Umfangsrichtung U verläuft in der Figur 2 von oben nach unten; der abgebildete Laufstreifen 1 ist dazu ausgelegt, bei Vorwärtsfahrt mit der in der Figur unten dargestellten Seite zuerst in Bodenkontakt zu treten. Das Profilpositiv 4 ist nach radial außen hin von einer Basisfläche 5 begrenzt. Die Basisfläche 5 grenzt entlang einer Kantenkontur 9 an eine Übergangsfläche 8 an. Die Übergangsfläche 8 grenzt entlang einer Grenzlinie 14 an eine Flankenfläche 6 an. Die Flankenfläche 6 grenzt den Profilblock 4 gegenüber Profilnegativ 3 in Form einer Querrille ab. Die Grenzlinie 14 fällt in dem gezeigten Ausführungsbeispiel mit einer Flankenkontur 10 zusammen, die in einer konstanten radialen Höhe auf der Flankenfläche 6 bzw. an deren radial oberem Rand verläuft. Durch in der Figur von oben nach unten verlaufende gestrichelte Linien sind erste und zweite axiale Positionen 11, 12 gekennzeichnet. Die Linien sind als imaginäre Hilfslinien zu verstehen und sind parallel zur Umfangsrichtung U ausgerichtet. Die zweite axiale Position 12 fällt in dem gezeigten Beispiel mit einem Reifenäquator zusammen.

In der Figur 2 von links nach rechts verlaufende gestrichelte Linien folgen dem Verlauf der Axialrichtung A. Schnittpunkte der ersten und zweiten axialen Position 11, 12, mit der Kantenkontur 9 und der Flankenkontur 10 sind durch ausgefüllte Kreissymbole markiert. Die Kantenkontur 9 schließt an der ersten axialen Position 11 einen Winkel 18 mit der Axialrichtung A ein, der größer ist als ein Winkel 19, welchen die Flankenkontur 10 an der ersten axialen Position 11 mit der Axialrichtung A einschließt. Die Kantenkontur 9 und die Flankenkontur 10 verlaufen um die erste axiale Position 11 herum geradlinig, sodass die Übergangsfläche 8 nach axial außen hin kontinuierlich breiter wird. Mit der Winkeldifferenz zwischen den Winkeln 18, 19 ist es möglich, die Kantenkontur 9 unter einem vergleichsweise steilen Winkel 18 gegenüber der Axialrichtung A anzustellen, um einen für die Geräuscherzeugung vorteilhaften Eintritt des Profilblocks 4 in einen Reifenlatsch zu ermöglichen, während die Flankenkontur 10 vergleichsweise flach zur Axialrichtung A verläuft, sodass der Profilblock 4 im radial unteren Bereich in Umfangsrichtung vergleichsweise breit und stabil ausgebildet werden kann. An der zweiten axialen Position 12 schließen die Kantenkontur 9 und die Flankenkontur 10 jeweils Winkel 20, 21 von 0° mit der Axialrichtung A ein; die Winkel 20, 21 werden lokal an den verrundeten bzw. abgerundeten Spitzen der v-förmigen bzw. u-förmigen Verläufe der Kantenkontur 9 bzw. Flankenkontur 10 gemessen. Das Profil ist in dem gezeigten Ausschnitt des gezeigten Ausführungsbeispiels im Wesentlichen spiegelsymmetrisch zur Umfangsrichtung U ausgebildet.

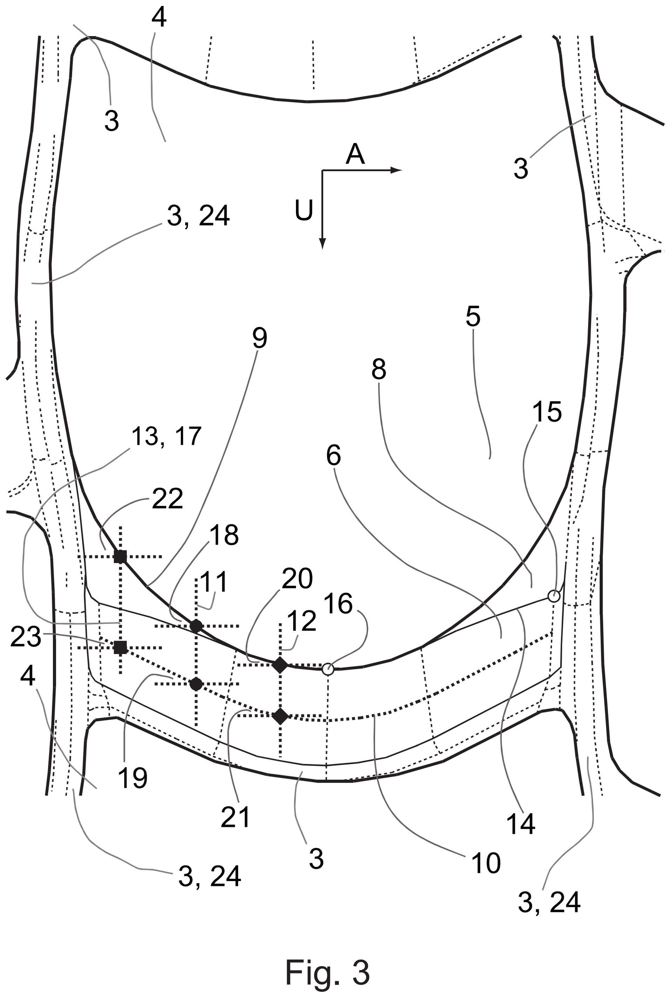

Figur 3 zeigt schematisch und ausschnittsweise eine Draufsicht auf eine zweite Ausführungsführungsform eines erfindungsgemäßen Laufstreifens 1. Die zweite Ausführungsform ähnelt in vielen Aspekten der oben beschriebenen ersten Ausführungsform. Signifikante Unterschiede zur ersten Ausführungsform liegen vor allem in den Verläufen der Kantenkontur 9 und der Grenzlinie 14. Die Kantenkontur 9 weist eine gut erkennbare Krümmung um eine im Wesentlichen senkrecht auf der Zeichnungsebene stehende, in Radialrichtung verlaufende Achse auf und beschreibt insgesamt eine langgezogene U-Form. Die Grenzlinie 14 weist Krümmungen um parallel zu der Basisfläche 5 verlaufende Achsen auf. Ein radial höchster Punkt 16 und ein radial niedrigster Punkt 15 auf der Grenzlinie 14 sind in der Figur durch leere Kreissymbole markiert. An dem radial höchsten Punkt verläuft die Grenzlinie 14 direkt zwischen der Basisfläche 5 und der Flankenfläche 6. In diesem Bereich schneidet ein Reifenäquator die Grenzlinie 14. Axial außerhalb ist je eine Übergangsfläche 8 zwischen der Kantenkontur 9 und der Grenzlinie 14 ausgebildet. Die Übergangsflächen 8 können im Rahmen der gezeigten Ausführungsform und/oder anderer Ausführungsformen jeweils die Form eines Kugeloberflächensegments annehmen.

Eine Flankenkontur 10 fällt in Figur 3 nicht mit der Grenzlinie 14 zusammen, sondern verläuft unterhalb des niedrigsten Punktes 15 in konstanter radialer Höhe auf der Flankenfläche 6. Durch in der Figur von oben nach unten verlaufende gestrichelte Linien sind erste, zweite und dritte bzw. weitere axiale Positionen 11, 12, 13, 17 gekennzeichnet. Wie für Figur 2 sind die Linien als imaginäre Hilfslinien zu verstehen, die parallel zur Umfangsrichtung U ausgerichtet sind. Die Kantenkontur 9 schließt an der ersten axialen Position 11 einen Winkel 18 mit der Axialrichtung A ein, der um eine erste Winkeldifferenz größer ist als ein Winkel 19, welchen die Flankenkontur 10 an der ersten axialen Position 11 mit der Axialrichtung A einschließt. Die Kantenkontur 9 schließt an der dritten Position 13, bzw. an der weiteren Position 17, die im vorliegenden Beispiel zusammenfallen, einen Winkel 22 mit der Axialrichtung A ein, der um eine dritte bzw. weitere Winkeldifferenz größer ist als der Winkel 23, welchen die Flankenkontur 10 mit der Axialrichtung A einschließt. Hierbei ist die dritte bzw. weitere Winkeldifferenz größer als die erste Winkeldifferenz. Durch die Krümmung der Kantenkontur 9 und die im Gegensatz dazu nahe an der Axialrichtung A verlaufende Flankenkontur 10 nimmt die Winkeldifferenz nach axial außen kontinuierlich zu. Die Grenzlinie 14 verläuft an der ersten axialen Position 11 auf einer größeren radialen Höhe als an der dritten bzw. weiteren axialen Position 13, 17. Die radiale Höhe der Grenzlinie 14 und die Winkeldifferenz zwischen Kantenkontur 9 und Flankenkontur 10 stehen in dem gezeigten Ausführungsbeispiel in einem stetigen und monotonen Zusammenhang. Hierdurch ergibt sich ein elegantes und effizientes Design, welches dem Laufsteifen 1 eine geringe Rissanfälligkeit und ein gutes Strömungsverhalten verleiht. An der zweiten axialen Position 12 schließen die Kantenkontur 9 und die Flankenkontur 10 jeweils von Null verschiedene, gleichgroße Winkel 20, 21 mit der Axialrichtung A ein und die Kantenkontur 9 verläuft direkt an der Grenze zur Flankenfläche 6, lokal also ohne eine dazwischen ausgebildete Übergangsfläche 8. Gemäß der in Figur 3 gezeigten zweiten Ausführungsform sind Winkeldifferenz und Übergangsfläche 8 somit auf axial weiter außen liegende Bereiche beschränkt, dort dafür aber umso stärker ausgeprägt.

### Bezugszeichenliste

- 1: Laufstreifen
- 2: Fahrzeugreifen
- 3: Profilnegativ
- 4: Profilpositiv
- 5: Basisfläche
- 6: Flankenfläche
- 8: Übergangsfläche
- 9: Kantenkontur
- 10: Flankenkontur
- 11: erste axiale Position
- 12: zweite axiale Position
- 13: dritte axiale Position
- 14: Grenzlinie
- 15: niedrigster Punkt (auf Grenzlinie)
- 16: höchster Punkt (auf Grenzlinie)
- 17: weitere axiale Position
- 18: Winkel (Kantenkontur / Axialrichtung, erste axiale Position)
- 19: Winkel (Flankenkontur / Axialrichtung, erste axiale Position)
- 20: Winkel (Kantenkontur / Axialrichtung, zweite axiale Position)
- 21: Winkel (Flankenkontur / Axialrichtung, zweite axiale Position)
- 22: Winkel (Kantenkontur / Axialrichtung, dritte axiale Position)
- 23: Winkel (Flankenkontur / Axialrichtung, dritte axiale Position)
- 24: Umfangsrille
- A: Axialrichtung
- R: Radialrichtung
- U: Umfangsrichtung

## Patentansprüche

1. Laufstreifen (1)für einen Fahrzeugreifen (2), wobei in dem Laufstreifen (1) Profilnegativ (3) und Profilpositiv (4) ausgebildet ist, wobei das Profilpositiv (4) in einer Radialrichtung (R) außen von einer Basisfläche (5) des Laufstreifens (1) begrenzt wird, wobei das Profilpositiv (4) wenigstens abschnittsweise durch eine Flankenfläche (6) gegenüber dem Profilnegativ (3) abgegrenzt ist, wobei zwischen der Flankenfläche (6) und der Basisfläche (5) eine Übergangsfläche (8) ausgebildet ist, wobei die Übergangsfläche (8) entlang einer Kantenkontur (9) an die Basisfläche (5) angrenzt,
**dadurch gekennzeichnet,**
**dass** radial unterhalb der Übergangsfläche (8) eine imaginäre Flankenkontur (10) in einer konstanten radialen Höhe auf der Flankenfläche (6) verläuft, wobei die Kantenkontur (9) an einer ersten axialen Position (11) einen um eine erste Winkeldifferenz größeren Winkel (18) mit einer Axialrichtung (A) einschließt als die Flankenkontur (10).

2. Laufstreifen (1) gemäß einem der Ansprüche 1, **dadurch gekennzeichnet, dass** die Kantenkontur (9) an einer zweiten axialen Position (12) einen gleichgroßen Winkel (20) mit der Axialrichtung (A) einschließt wie die Flankenkontur (10), wobei die Kantenkontur (9) an der zweiten axialen Position (12) an einer Grenze zwischen der Übergangsfläche (8) und der Basisfläche (5) oder zwischen der Flankenfläche (8) und der Basisfläche (5) verläuft.

3. Laufstreifen (1) gemäß Anspruch 2, **dadurch gekennzeichnet, dass** die erste axiale Position (11) weiter von einem Reifenäquator entfernt ist als die zweite Position (12).

4. Laufstreifen (1) gemäß einem der Ansprüche 1 bis 3, **dadurch gekennzeichnet, dass** die Kantenkontur (9) an einer dritten axialen Position (13) einen um eine dritte Winkeldifferenz größeren Winkel (22) mit der Axialrichtung (A) einschließt als die Flankenkontur (10), wobei die dritte Winkeldifferenz größer ist als die erste Winkeldifferenz.

5. Laufstreifen (1) gemäß Anspruch 4, **dadurch gekennzeichnet, dass** die dritte axiale Position (13) weiter von einem Reifenäquator entfernt ist als die erste axiale Position (11).

6. Laufstreifen (1) gemäß einem der Ansprüche 1 bis 5, **dadurch gekennzeichnet, dass** die Flankenfläche (6) an einer Grenzlinie (14) an die Übergangsfläche (8) angrenzt, wobei die Grenzlinie (14) wenigstens abschnittsweise in einer veränderlichen radialen Höhe verläuft.

7. Laufstreifen (1) gemäß Anspruch 6, **dadurch gekennzeichnet, dass** die Grenzlinie (14) an einem niedrigsten Punkt (15) in einer radialen Höhe in einem Bereich zwischen 50% und 90% eines radialen Abstands zwischen einem Grund des Profilnegativs (3) und der Basisfläche (5) oberhalb des Grundes des Profilnegativs (3) verläuft und/oder dass die Grenzlinie (14) an einem höchsten Punkt (16) in einer radialen Höhe in einem Bereich zwischen 80% und 100% des radialen Abstands zwischen dem Grund des Profilnegativs (3) und der Basisfläche (5) oberhalb des Grundes des Profilnegativs (3) verläuft.

8. Laufstreifen (1) gemäß einem der Ansprüche 6 oder 7, **dadurch gekennzeichnet, dass** die Kantenkontur (9) an einer weiteren axialen Position (17) einen um eine weitere Winkeldifferenz größeren Winkel mit der Axialrichtung (A) einschließt als die Flankenkontur (10), wobei die weitere Winkeldifferenz größer ist als die erste Winkeldifferenz, wobei die Grenzlinie (14) an der ersten axialen Position (11) auf einer größeren radialen Höhe verläuft als an der weiteren axialen Position (17).

9. Laufstreifen (1) gemäß einem der Ansprüche 1 bis 8, **dadurch gekennzeichnet, dass** die Flankenfläche (6) an einer Grenzlinie (14) wenigstens abschnittsweise in einer konstanten radialen Höhe an die Übergangsfläche (8) angrenzt.

10. Laufstreifen (1) gemäß Anspruch 9, **dadurch gekennzeichnet, dass** die Grenzlinie (14) wenigstens abschnittsweise in einer konstanten radialen Höhe in einem Bereich zwischen 70% und 95% eines radialen Abstands zwischen einem Grund des Profilnegativs (3) und der Basisfläche (5) oberhalb des Grundes des Profilnegativs (3) verläuft.

11. Laufstreifen (1) gemäß einem der Ansprüche 9 oder 10, **dadurch gekennzeichnet, dass** die Flankenkontur (10) wenigstens abschnittsweise an der Grenzlinie (14) auf der Flankenfläche (6) verläuft.

12. Laufstreifen (1) gemäß einem der Ansprüche 1 bis 11, **dadurch gekennzeichnet, dass** die Kantenkontur (9) wenigstens abschnittsweise geradlinig verläuft und/oder dass die Flankenkontur (10) wenigstens abschnittsweise geradlinig verläuft.

13. Laufstreifen (1) gemäß einem der Ansprüche 1 bis 12, **dadurch gekennzeichnet, dass** die Kantenkontur (9) und/oder die Flankenkontur (10) von einem Reifeäquator geschnitten werden und symmetrisch zu dem Reifenäquator verlaufen.

14. Laufstreifen (1) gemäß einem der Ansprüche 1 bis 13, **dadurch gekennzeichnet, dass** vier Umfangsrillen (24) in dem Laufstreifen (1) ausgebildet sind und/oder dass ein direktionales Profil in dem Laufstreifen (1) ausgebildet ist.

15. Fahrzeugreifen (2), umfassend einen Laufstreifen (1) gemäß einem der Ansprüche 1 bis 14.
